# NEUE EUROPÄISCHE PATENTSCHRIFT

(11) **EP 0 776 261 B2**
(45) Veröffentlichungstag und Bekanntmachung des Hinweises auf die Entscheidung über den Einspruch: **29.05.2002**
(45) Hinweis auf die Patenterteilung: 22.04.1998
(21) Anmeldenummer: 95923330.5
(22) Anmeldetag: 15.06.1995
(51) Int. Cl.: B23K 9/20

(54) **VORRICHTUNG ZUM ZUSAMMENSCHWEISSEN WENIGSTENS ZWEIER TEILE UND MIT DIESER VORRICHTUNG DURCHFÜHRBARES VERFAHREN**
DEVICE FOR WELDING TOGETHER AT LEAST TWO PARTS, AND METHOD USING THE DEVICE
DISPOSITIF D'ASSEMBLAGE PAR SOUDAGE D'AU MOINS DEUX PIECES ET PROCEDE FAISANT APPEL AUDIT DISPOSITIF

(30) Priorität: 16.08.1994 DE 4429000
(43) Veröffentlichungstag der Anmeldung: 04.06.1997
(73) Patentinhaber: Nelson Bolzenschweiss-Technik GmbH & Co. KG, 58285 Gevelsberg (DE)
(72) Erfinder: Kirchner, Eduard, 77767 Appenweier (DE); Claussen, Carsten M., 10787 Berlin (DE); Ilch, Hartmut H., 77694 Kehl (DE)
(74) Vertreter: Eder, Thomas, Dr.-Ing.
(86) Internationale Anmeldenummer: EP9502320
(87) Internationale Veröffentlichungsnummer: WO9605015

(56) Entgegenhaltungen:
- EP-A- 0 410 391
- DE-C- 3 414 522
- DE-U- 8 910 643
- DATABASE WPI Week 9323 28.Juli 1993 Derwent Publications Ltd., London, GB; AN 93-187577 'Compression drive mechanism of machines for welding of bars into T pieces - has distributor to control passage of working medium to cavities of two-piston cylinder, and uses piston to move welding rod and maintain required arc length.' & SU,A,1 742 003 (ORGYUGSTROI BUILDING IND INST) , 23.Juni 1992
- PATENT ABSTRACTS OF JAPAN vol. 16 no. 534 (M-1334) ,4.November 1992 & JP,A,04 200981 (NISSAN MOTORS CO LTD) 21.Juli 1992,

## Beschreibung

Die Erfindung bezieht sich auf eine Vorrichtung und Verwendung einer Vorrichtung zum Lichtbogenpreßschweißen mit den Merkmalen des Oberbegriffs des Anspruchs 1.

Eine Vorrichtung dieser Art, mit welcher das Lichtbogenpreßschweißen durchgeführt wird, ist bereits bekannt. Letzteres findet beispielsweise in der Automobiltechnik bzw. Karosserietechnik Anwendung. Hierbei wird zum Beispiel ein kleines Teil an ein größeres angeschweißt, im speziellen ein Bolzen an ein Karosserieteil. Das zweite Teil wird gegenüber dem ersten Teil genau ausgerichtet, was mit Hilfe eines für sich bekannten Verstellantriebs bewerkstelligt werden kann. Die Verstellvorrichtung bewirkt dann die Relativbewegung des zweiten Teils gegenüber dem ersten Teil, beispielsweise ein Zustellen, gegebenenfalls nach vorherigem Abheben. Beim Widerstandsschmelzschweißen wird der Schmelzfluß zwischen den beiden Teilen durch elektrischen Widerstand erzeugt Beim Widerstandspreßschweißen erzeugt der elektrische Widerstand in der Schweiβzone beim Stromdurchgang die zum Schweiβen erforderliche Wärme. Die Bindung zwischen den zu verbindenden Stellen wird durch Zusammenpressen der Teile erzeugt. Zu dieser Schweißart gehört beispielsweise auch das Punktschweißen und das Buckelschweißen. Beim Lichtbogenschweißen brennt ein Lichtbogen zwischen den beiden Teilen, wobei eines der Teile in der Regel eine Schweißelektrode ist, die beim Schweißen abschmilzt.

Beim Lichtbogenpreßschweißen wird ein Lichtbogen zwischen dem ersten und dem zweiten Teil gezündet, wodurch beide an den Enden des Lichtbogens anschmelzen. Anschließend nähert man dann das zweite Teil an das erste relativ rasch an, so daß sich dann die Schmelzen vereinigen. Nach dem Erhärten der gesamten Schmelze sind die beiden Teile zusammengeschweißt. Wichtig ist also hierbei auf jeden Fall eine Relativbewegung des ersten und zweiten Teils, wobei in der Regel eines feststeht und das andere angenähert wird, und wobei der Annäherung eine gegenläufige Bewegung vorangehen kann. Letztere kann allerdings entfallen, wenn aufgrund besonderer Formgebung das zustellbare Teil durch partielles Abschmelzen verkürzt wird, bevor das allgemeine starke Anschmelzen beider Teile beginnt.

Bei einer bekannten Vorrichtung, die zum Lichtbogenpreßschweißen dient, wird das zweite Teil auf einen vorbestimmten Abstand zum ersten Teil gebracht, was man mit Hilfe eines Stützfußes oder Dreibeins leicht bewirken kann. Das an das erste Teil anzuschweißende zweite Teil, z.B. ein Bolzen der sich in einem Schweißkopf befindet, wird gegenüber dem ersten Teil oder Basisteil, z.B. einer PKW-Karosserie genau positioniert. Dabei bewegt ein meist pneumatischer Schlitten den eigentlichen Schweißhubmechanismus mit dem anzuschweißenden Bolzen gegen das erste ortsfeste Teil hin. Die Anpreßkraft, mit welcher der Bolzen beim Zusammenschweißen gegen das Basisteil gepreßt wird, ist dabei, wenn man von einer mechanischen Umrüstung absieht, nicht frei einstellbar. Der Stützfuß benötigt einen Freiraum von ca. 30 mm um den zu verschweißenden Bolzen, in dem keine Störkonturen angeordnet sein dürfen.

Durch Zünden eines Vorstroms wird der Schweißvorgang eingeleitet. Mittels einer Hubeinrichtung, zumeist einem Hubmagneten, wird der Bolzen bei gezündetem Vorstrom gegen eine Rückstelleinrichtung, insbesondere eine Rückstellfeder, bis zu einem Festanschlag angehoben. Wenn man auch hier von einer mechanischen Umrüstung absieht, so ist die Schweißhubhöhe nur einmalig einstellbar.

Durch den anstehenden Vorstrom wird ein schwacher Lichtbogen erzeugt. Der Hauptstrom wird nach Erreichen der maximalen Hubhöhe gezündet. Er erzeugt die für das Zusammenschweißen notwendige Schmelze. Wird der Strom des elektrischen Hubmagneten abgeschaltet, so bewirkt die Belastungsfeder ein schlagartiges Zustellen des zweiten Teils in Richtung des ersten Teils, so daß das zweite Teil mit maximaler Geschwindigkeit in die Schmelze des ersten Teils eindringt Ein teilweises Verspritzen der Schmelze ist unvermeidlich.

Die Eintauchbewegung erfolgt weitgehend ungeregelt und ist unter anderem auch von der Federkennlinie abhängig. Aufgrund des weitgehend unkontrollierten Eintauchverhaltens und der Eintauchgeschwindigkeit sind Fehlschweißungen nahezu unvermeidlich. Dies hängt vor allen Dingen auch mit Schwingungsvorgängen zusammen, die'beim Auftreffen des zweiten Teils auf dem ersten eingeleitet werden.

Weil der Großteil der Einstellungen ein und derselben Vorrichtung - zumindest nach einer vorgenommenen Ersteinstellung - unveränderlich ist, so beispielsweise der Kennwert der Feder, die Federvorspannung, die Leistungsdaten des Hubmagneten, die Hubhöhe etc., wirken sich Toleranzschwankungen der beiden Teile innerhalb einer Serie negativ aus. Es ist auch nicht ohne weiteres möglich, beispielsweise einen Bolzentyp durch einen anderen zu ersetzen, ohne vorher die Grundeinstellung neu vorzunehmen. Auf Beschleunigung und Zustellgeschwindigkeit des Bolzens kann man nach der Ersteinstellung keinen Einfluß mehr nehmen, vielmehr trifft das zweite Teil grundsätzlich mit hoher Geschwindigkeit auf dem ersten Teil auf, was zu einem Wegspritzen der Schmelze und damit zu einem schlechten Schweißergebnis führen kann. Wieviel Material jeweils wegspritzt, hängt von der Toleranzpaarung ab. Ein sanftes Eintauchen ist nicht möglich. Im übrigen spielt bei dieser Vorrichtung auch die Schweißlage eine Rolle, d.h. man erhält unterschiedliche Ergebnisse, ob man nach oben, nach unten oder seitlich schweißt. Mit sogenannten Schweißpistolen wird aber in der Regel nach allen Richtungen hin geschweißt.

Aus der DE 34 14 522 C1 ist ein Bolzenschweißgerät der eingangs genannten Art bekannt, bei dem mittels des Schweißkopfes ein anzuschweißender Schweißbolzen dem Werkstück zugeführt wird. Die Zuführbewegung erfolgt zunächst mit geringer Kraft, bis ein Betätigungsstößel ein Ventil öffnet, so daß der Rest des Weges mit großer Kraft gefahren werden kann. Mit diesem Gerät wird die Gefahr einer Verletzung der Bedienperson vermindert. Mit der JP-A-42 00 981 ist ein Bolzenschweißgerät bekannt geworden, welches im Lernprogramm mit geringem und im Arbeitsprogramm mit hohem Druck arbeitet. Hier ist die Gefahr der Beschädigung der Bauteile verringert.

Es liegt infolgedessen die Aufgabe vor, eine Vorrichtung der eingangs beschriebenen Art so weiterzubilden, daß die geschilderten Nachteile vermieden werden und optimale Schweißergebnisse erzielt werden können, bei geringstmöglicher Ausschußquote. Es wird vor allen Dingen angestrebt, reproduzierbare Ergebnisse zu erzielen, was eine Minimierung oder gar einen Wegfall der erwähnten Schwingungen beim Aufeinanderprallen der beiden Teile zur Voraussetzung hat. Desweiteren soll die Schweißrichtung auf das Schweißergebnis keinen negativen Einfluß ausüben.

Zur Lösung dieser Aufgabe wird eine Vorrichtung gemäß Anspruch 1 vorgeschlagen.

Wesentliche Elemente dieser Vorrichtung sind das Wegmeßsystem und eine Verstellvorrichtung für die Haltevorrichtung für das zweite Teil. Mittels eines Verstellantriebs, z.B. eines Roboterarmes, der in herkömmlicher Weise ausgebildet sein und gesteuert werden kann, wird das zweite Teil, z.B. ein anzuschweißender Bolzen, gegenüber der Schweißstelle des ersten Teils genau ausgerichtet. Anschließend preßt man dann beim Lichtbogenpreßschweißverfahren das zweite Teil in der geschilderten Weise an das erste Teil an, wobei der Schweißstrom noch ausgeschaltet ist. Unabhängig von den Toleranzen der zusammenzuschweißenden Teile wird nun mit Hilfe des Wegmeßsystems die Relativstellung der Haltevorrichtung mit dem zweiten Teil gegenüber dem Schweißkopf ermittelt, was einer Nullpunktfestsetzung gleichkommt. Anschließend wird das zweite Teil vom ersten Teil abgehoben, wobei zuvor der Schweiß-Vorstrom eingeschaltet wird. Dieses Hochheben erfolgt geregelt, und zwar ausgehend von dem festgelegten Nullpunkt um einen frei wählbaren Betrag. Auf diese Weise wird der Höhenabstand nach dem Abheben unabhängig von den Toleranzen genau eingehalten. Nach Zündung des Hauptstroms wird das zweite Teil an das erste Teil angenähert, wobei der Hauptstrom die Bildung einer Schmelze an beiden Teilen im Bereich der vorgesehenen Verbindungsstelle bewirkt. Das Zustellen des zweiten Teils gegen das erste wird wiederum mit Hilfe des Wegmeßsystems genau vorgenommen, wobei der Zustellweg etwas größer sein kann als der Abhebeweg, da das zweite Teil in die Schmelze des ersten Teils eindringen muß und es durch die Schmelzenbildung auch etwas kürzer geworden ist. Nach Erkalten der Schmelze gibt man das zweite Teil frei. Es ist nunmehr fest an das erste angeschweißt.

Wenn man beim Lichtbogenschweißverfahren einen Bolzen mit Abschmelzspitze verwendet, so kann die Anhebebewegung vor Zündung des Hauptstroms ganz oder zumindest teilweise entfallen, weil man eine relative Anhebung des Bolzens durch das Abschmelzen der Spitze erreicht. Auch in diesem Falle wird die Position des Bolzens vor der Zündung des Vorstroms genau ermittelt bzw. eingenommen und sie dient als Referenzpunkt für die nachfolgende Bolzenbewegung oder - bewegungen.

Mit Hilfe der Programmsteuerung können die ermittelten und eingegebenen Daten bzw. Einstellwerte in vorbestimmter Weise verarbeitet und bei der Festlegung der Beschleunigung sowie der Verzögerung und/oder der Geschwindigkeit bei jeder Neueinstellung in jeder gewünschten Weise berücksichtigt werden. Hierdurch lassen sich auch die schädlichen Schwingungsbewegungen ausschalten und vor allen Dingen auch Maßtoleranzen der beiden Teile eliminieren. Das geforderte sanfte Eintauchen in das Schmelzbad kann realisiert werden.

Eine Weiterbildung der Erfindung sieht vor, daß die Verstellvorrichtung für die Haltevorrichtung ein doppeltwirkender Arbeitszylinder, insbesondere ein Servopneumatik- oder -hydraulikzylinder, ist. Das ausfahrbare Teil des Arbeitszylinders, beispielsweise dessen Kolbenstange, trägt die Haltevorrichtung für den Anschweißbolzen. Der Schweißkopf wird mittels des Verstellantriebs, z.B. eines Roboterarmes, gegenüber der Schweißstelle so ausgerichtet, daß sich das Anschweißende des Bolzens genau über der Schweißstelle und zwar in geringem Abstand von dieser befindet. Mit Hilfe des Verstellantriebs wird der Bolzen nun auf die Schweißstelle aufgesetzt und aufgepreßt. Der Roboterarm kann dabei mit maximaler Geschwindigkeit bis in seine Endstellung gefahren werden. Der gesamte Bewegungsablauf erfolgt dabei kontinuierlich. Das Anpressen des Bolzens bewirkt ein Ausgleich aller Toleranzen von Werkstücken und Werkzeugen. Durch das Anpressen des Bolzens wird die Kolbenstange des servopneumatischen Systems in den Zylinder eingeschoben. Gleichzeitig wird mit Hilfe des Wegmeßsystems die Position ermittelt, welche die Haltevorrichtung im Verhältnis zu ihrer Ausgangsposition bzw. in Relation zum Schweißkopf nunmehr einnimmt. Die neue Position nach dem Einpressen entspricht vorzugsweise einem Wegwert Null. Mit Hilfe der Verstellvorrichtung kann man daraufhin den Bolzen um einen frei wählbaren Wert vom ersten Teil abheben, der dann unabhängig von den Bolzentoleranzen und dergleichen eine exakte Größe darstellt.

Bevorzugt wird vor dem Anpressen des Bolzens an der Fahrzeugkarroserie der Druck im servorpneumatischen System abgesenkt, so daß der Kolben problemlos einschiebbar ist. Hat der Roboterarm seine Endlage erreicht, d.h. wurde der Bolzen auf die Fahrzeugkarroserie aufgesetzt und angepreßt und dabei der Kolben in den Zylinder eingeschoben, wird die aktuelle Position als Sollwert eingestellt und dann der Druck im servopneumatischen System wieder angehoben.

Bei einem Bolzen mit Abschmelzspitze kann man gegebenenfalls nach dem Abschmelzen der letzteren auf das Abheben vor der Zündung des Hauptstroms verzichten.

Aufgrund der Verwendung eines doppeltwirkenden Zylinders kann man ausgehend von der angehobenen Position des Bolzens durch entsprechende Druckbeaufschlagung des Kolbens die Abwärtsbewegung des Bolzens in vorbestimmter, aber frei wählbarer Weise vornehmen.

An die Stelle der fest vorgegebenen Kraft und Bewegungscharakteristik der Belastungsfeder des bekannten Standes der Technik tritt nunmehr eine genau festlegbare sowie steuerbare Kraft und Bewegungscharakteristik des servopneumatischen Systems, dessen Kolben (oder Zylinder) mit beliebig wählbaren Geschwindigkeiten, Beschleunigungen und Verzögerungen sowie beliebigen Kräften manipuliert ist.

Beim Zustellen des Halters mit dem Bolzen mittels des Roboterarms reduziert man den Druck im Arbeitszylinder. Nach der Ablage des Bolzens wird der Schweißkopf, wie bereits erläutert, weiter gegen das zweite Teil zugestellt, was zu einem Verschieben des Kolbens mit dem Halter und dem Bolzen gegenüber dem Schweißkopf führt. Wenn der Roboterarm seine Endstellung erreicht hat, wird die Stellung der Haltevorrichtung, d.h. des servopneumatischen Systems mittels des Wegmeßsystems ermittelt und die aktuelle Position hinsichtlich der weiteren Verstellbewegungen als Referenzposition herangezogen.

Um nach Zündung des Hauptstroms eine hinsichtlich Beschleunigung, Geschwindigkeit und Verzögerung genau vorgegebene Zustellung zu erreichen, sieht eine weitere Ausgestaltung der Erfindung vor, daß die Position des Kolbens in den beiden Zylinderräumen der Verstellvorrichtung mittels einer Meß- und Regelvorrichtung erfaßbar sowie zeit- und/oder wegabhängig regelbar ist. Wenn die beiden Teile in der gewünschten Weise angeschmolzen sind, so kann man zunächst den Bolzen mit maximaler Beschleunigung und Geschwindigkeit bis nahe an das erste Teil heranfahren und dann, insbesondere um ein Wegspritzen der Schmelze zu vermeiden, maximal verzögern und sanft in diese Schmelze eintauchen. Weil diese Parameter frei wählbar bzw. in den Rechner eingebbar sind, kann man leicht von einem Bolzentyp auf einen anderen übergehen. Entsprechendes gilt auch für ein andersartiges erstes Teil, z.B. andere Karosserieblechstärken und die übrigen beschriebenen Verstellungen.

Bei Verwendung eines Anschweißbolzens verwendet man als Haltevorrichtung wie vielfach üblich eine Spannzange, Spannhülse oder dergleichen, während man bei Verwendung eines Blechteils als zweites Teil eine dementsprechende Haltevorrichtung vorsieht, die entsprechend der Form dieses zweiten Teils gestaltet und ausgebildet ist.

Die Aufgabe der Erfindung besteht desweiteren darin, ein Verfahren zu schaffen, welches mit der erfindungsgemäßen Vorrichtung durchgeführt werden kann.

Erfindungsgemäß wird diese Aufgabe dadurch gelöst, daß das Verfahren die im Anspruch 7 aufgeführten Verfahrensschritte umfaßt.

Indirekt sind diese Verfahrensschritte im Zusammenhang mit der Erläuterung der erfindungsgemäßen Vorrichtung bereits angesprochen worden. Andererseits erfolgt aber eine Beschreibung dieses Verfahrens auch nachfolgend im Rahmen der Beschreibung eines Ausführungsbeispiels der Erfindung.

Weitere Ausgestaltungen dieses Verfahrens sowie weitere Wirkungsweisen und Vorteile der erfindungsgemäßen Vorrichtung und des Verfahrens ergeben sich aus der nachfolgenden Beschreibung eines Ausführungsbeispiels der Erfindung.

Die Erfindung wird nachstehend anhand der Zeichnung näher erläutert. Hierbei stellen dar:
- Figur 1: In vier aufeinanderfolgenden, mit a bis d bezeichneten Phasen schematisch den Schweißkopf mit der Haltevorrichtung, dem Wegmeßsystem, der Verstellvorrichtung und dem als Anschweißbolzen ausgebildeten zweiten Teil;
- Figur 2: In neun aufeinanderfolgenden, mit A bis I bezeichneten Phasen den Ablauf des erfindungsgemäßen Verfahrens;
- Figur 3: Ein Diagramm mit dem Stromverlauf und Bewegungsverlauf gemäß Figur 2.

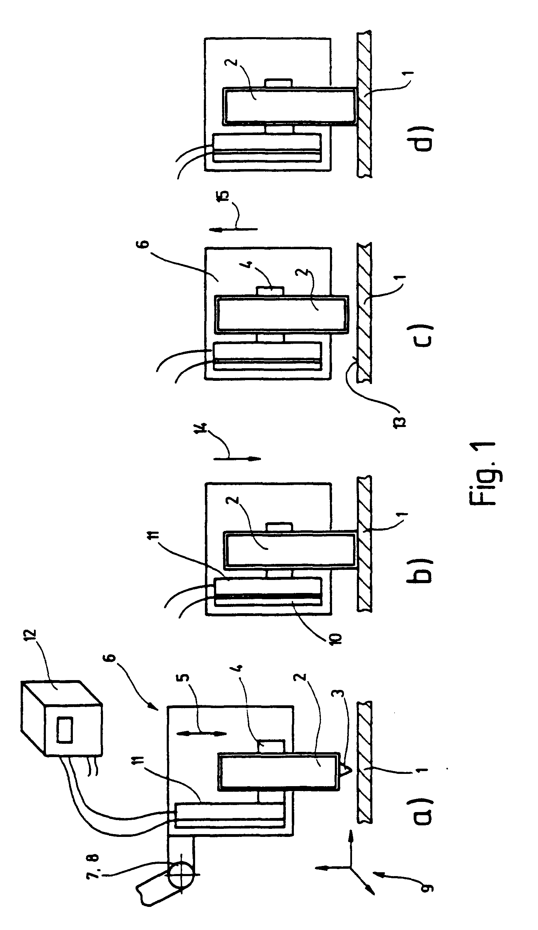

An ein erstes Teil 1, beispielsweise eine FahrzeugKarosserie soll ein zweites Teil 2, insbesondere ein Bolzen, angeschweißt werden, wobei beim Ausführungsbeispiel das Uchtbogenpreßschweißverfahren angewandt wird. Das erste Teil 1 ist in der Zeichnung lediglich schematisch angedeutet, und auch das zweite Teil 2 kann abweichend von der Darstellung ausgeführt sein. Es kann beispielsweise mit einem Anschweißfuß, aber auch mit einer Zündspitze 3 versehen sein, die in der Phase a der Figur 1 mit gestrichelten Linien angedeutet ist. Das zweite Teil - nachfolgend lediglich noch "Bolzen 2" genannt - wird von einer Haltevorrichtung 4 aufgenommen, die aus einer Spannzange, Spannhülse oder dergleichen bestehen oder eine solche aufweisen kann. Die Haltevorrichtung 4 ist im Sinne des Doppelpfeils 5 zu- und rückstellbar an einem Schweißkopf 6 gelagert, wobei die senkrechte Zustellrichtung in Richtung auf das erste Teil angesprochen ist. Der Schweißkopf 6 selbst kann ebenfalls verstellt werden, und zwar bevorzugterweise in allen drei Koordinatenrichtungen, wie man dies von einem Verstellantrieb, 8 insbesondere einem Roboterarm 7 her kennt. Es ist insbesondere vorgesehen, daß der Schweißkopf 6 von einem Roboterarm 7 gehalten und mittels diesem bewegt wird. Dies erreicht man mit Hilfe eines symbolisch dargestellten Roboterarms 7. Die Verstellbewegungen dieses Roboterarms 7 sind durch die drei Pfeile 9 symbolisiert, welche die drei Koordinatenrichtungen eines Koordinatensystems darstellen sollen.

Auf diese Weise ist es also möglich, den Bolzen 2 bzw. dessen geometrische Achse genau gegenüber der Anschweißstelle des ersten Teils 1 auszurichten.

In der Phase a der Figur 1 befindet sich der Bolzen 2 in geringem Höhenabstand über der Anschweißstelle. Das Ausrichten erfolgte durch Verstellen des Schweißkopf 6 mittels des Roboterarms 7. Dieser nimmt außer der Haltevorrichtung 4 auch noch ein vorzugsweise elektronisch arbeitendes Wegmeßsystem 10 sowie eine Verstellvorrichtung 11 für die Haltevorrichtung 4 auf. Über schematisch eingezeichnete Leitungen sind diese Einrichtungen mit einer ebenfalls nur schematisch angedeuteten Programmsteuerung 12 mit einer Bedieneinheit zur Parametereingabe verbunden, worauf nachstehend noch näher eingegangen wird.

In der in der Phase a erreichten Stellung des Schweißkopfs 6 befindet sich die Haltevorrichtung 4 in ihrer einen, beim Ausführungsbeispiel der Zeichnung vorzugsweise unteren Endlage. Dadurch steht dann auch das Wegmeßsystem 10 noch mit seinem vollen Meßumfang bzw. der vollen Meßstrecke zur Verfügung.

Wenn man ausgehend von der Phase a der Figur 1 - zunächst ohne Berücksichtigung einer Zündspitze 3 - den Bolzen 2 an der zugeordneten Oberfläche 13 des ersten Teils, an welcher er angeschweißt werden soll, zustellt, indem man den Schweißkopf 6 in entsprechender Richtung bewegt, so trifft schließlich das zweite Teil 2 am ersten Teil 1 auf. Fährt man jedoch anschließend den Schweißkopf 6 mittels des Roboterarms 7 noch weiter nach unten, so kann der Bolzen 2 dieser weiteren Abwärtsbewegung nicht mehr folgen. Infolgedessen wird die Haltevorrichtung 4 gegenüber dem Schweißkopf 6 nach oben verschoben. Jede Stellung und insbesondere diese Relativverschiebung kann vom Wegmeßsystem 10 erfaßt werden. Die Endstellung ist dann erreicht, wenn der Roboterarm 7 seine einprogrammierbare Endstellung erreicht hat. Bis zu dieser Endstellung kann der Roboterarm 7 mit maximaler Geschwindigkeit fahren.

Bei der Verstellvorrichtung 11 kann es sich bevorzugterweise um einen doppeltwirkenden, servopneumatischen Arbeitszylinder handeln. Vor dem Anpressen des Bolzens 2 wird der Druck in beiden Zylinderräumen abgesenkt. Unterstellt man, daß in der Phase a der Figur 1 der Kolben in diesem Arbeitszylinder seine untere Endlage einnimmt, so wird er bei aufliegendem Bolzen beim Zustellen des Schweißkopfs 6 in Pfeilrichtung 14 im Zylinder relativ gesehen nach oben verschoben, d.h. genau genommen bewegt sich dabei der Zylinder gegenüber dem Kolben nach unten.

Die Endlage des Roboterarms 7 bzw. Schweißkopf 6 wird mit Hilfe des Wegmeßsystems 10 exakt erfaßt. Diese Position entspricht einer Nullstellung des Bolzens 2 gegenüber dem ersten Teil 1 bzw. der Karosserie.

In die Programmsteuerung 12 kann man einen Wert für eine weitere Hubverstellung des Haltevorrichtung 4 gegenüber dem Schweißkopf 6 eingeben. Mit Hilfe der Verstellvorrichtung 11 läßt sich der Bolzen 2, ausgehend von seiner in Phase b nach dem Anpressen erreichten Relativstellung gegenüber dem ersten Teil und dem Schweißkopf 6 im Sinne des Pfeils 15, um einen exakt vorgegebenen und frei wählbaren Wert, welcher wie gesagt in die Programmsteuerung 12 eingegeben wird, über das servopneumatische System anheben. Damit ist die Stellung gemäß Phase c in Figur 1 erreicht. Zwischen der Phase a und der Phase c wurde der Druck im Arbeitszylinder abgesenkt um ein problemloses Einpressen zu ermöglichen. Über den Arbeitszylinder wird der Bolzen 2, ausgehend von der Stellung in Phase c, gegen das erste Teil 1 hin abgesenkt. Mittels der Programmsteuerung erreicht man eine Zustellbewegung mit beliebiger Charakteristik. Es ist insbesondere vorgesehen, daß man den genau definierten Abstand (Phase c) des Bolzens 2 vom ersten Teil 1 zunächst in einer Art Eilgang überwindet und erst kurz vor Erreichen der Oberfläche 13 des ersten Teils 1 mit wesenlich verringerter Geschwindigkeit weiter absenkt. Eine hohe Beschleunigung führt in den Eilgang und dieser wird mit starker Verzögerung beendet.

Beim Übergang von der Phase b in die Phase c wird durch Zünden eines Vorstroms ein Lichtbogen erzeugt. Wenn die definierte Hubstellung des Bolzens 2 gemäß Phase c erreicht ist, zündet man den Hauptstrom, so daß ein kräftiger Lichtbogen entsteht, welcher das Bolzenende und den gegenüberliegenden Bereich des ersten Teils zum Schmelzen bringt. Beim nachfolgenden Absenken des Bolzens 2 tritt der an seinem vorderen Ende verflüssigte oder erweichte Bolzen 2 in das verflüssigte Material an der Oberfläche 13 des ersten Teils 1 sanft ein, wobei sich die Schmelzen vereinigen und dadurch der Anschweißvorgang bewirkt wird.

Es ist leicht einsehbar, daß man aufgrund der freien Wahl der verschiedenen Parameter, insbesondere aber der Beschleunigung und vorzugsweise auch einer veränderbaren Geschwindigkeit des Bolzens 2, aber auch der Regelung des Schweißstroms in Verbindung mit der Regelung des Verstellwegs bei der Abwärtsbewegung, den man ebenfalls unter Ausnutzung des Wegmeßsystems 10 vornimmt, die Eindringtiefe des Bolzens 2 in die Schmelze des ersten Teils 1 genau festlegen kann, was insbesondere bei dünnen Blechen, wie sie im Automobilbau bzw. Karosseriebau verwendet werden, sehr wichtig ist.

Wenn der Bolzen 2 mit einer Zündspitze 3 ausgestattet ist, so läßt sich das erfindungsgemäße Verfahren mit der erfindungsgemäßen Vorrichtung gleichermaßen durchführen. Es kann dabei der Rückhub, also die Anhebebewegung des Bolzens 2, beim Übergang von der Phase b in die Phase c unterbleiben. Möglich ist allerdings auch ein in seiner Länge reduzierter Rückhub. Beim Zünden des Schweißstromes schmilzt die Zündspitze 3 ab, weswegen allein durch diesen Vorgang der Bolzen 2 nach dem Abschmelzen der anliegenden bzw. angepreßten Zündspitze bei verschobenem Bolzen 2 gemäß Phase b die in Phase c erreichte Stellung einnimmt. Falls man auf eine zusätzlich Anhebung nach dem Abschmelzen der Zündspitze verzichtet, kann bei diesem Bolzen 2 gleich der Übergang von Phase b in Phase d vorgenommen werden. Auf jeden Fall entspricht aber das Abschmelzen der Zündspitze wenigstens einem Teil der Anhebebewegung des zweiten Teils gegenüber dem ersten Teil beim Übergang von Phase b in Phase c.

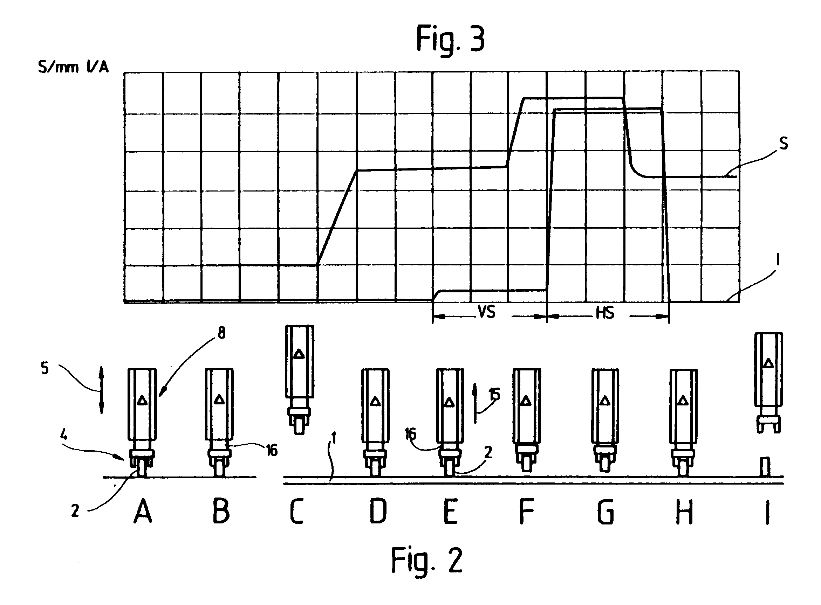

Figur 2 gibt den Verfahrensablauf in etwas ausführlicher Weise wieder als die Figur 1, jedoch ebenfalls wieder nur in schematisierter Weise. Im Gegensatz zu Figur 1 ist in Figur 2 die Haltevorrichtung 4 unmittelbar an das untere Ende der Kolbenstange 16 des Verstellantriebs 8 angesetzt, wohingegen in Figur 1 die seitliche Verbindung der Kolbenstange mit der Haltevorrichtung 4 nicht dargestellt ist, weil es hierauf im einzelnen nicht ankommt. Wichtig ist nur, daß die Haltevorrichtung 4 jeweils die Hebe- und Senkbewegung des Kolbens und der Kolbenstange mitmacht.

In der Phase A ist die Haltevorrichtung 4 geöffnet, jedoch gegenüber dem Bolzen 2 bereits derart ausgerichtet, daß sie diesen nach dem Schließen erfaßt. Dies ist in Phase B dargestellt. Das Greifen und Beibringen der Bolzen 2 an die Schweißstelle kann in bekannter Weise programmgesteuert ablaufen.

Die Phase C versinnbildlicht das Positionieren des Bolzens 2 über dem ersten Teil 1. In Phase D wird der Bolzen 2 auf die Schweißstelle aufgesetzt. Anschließend wird gemäß Phase E der Schweißkopf 6 weiter in Richtung auf das erste Teil 1 abgesenkt, was zu einer Einwärtsverschiebung des Kolbens und damit auch der Kolbenstange 16 mit dem Bolzen 2 in Pfeilrichtung 15 führt. Hieran schließt sich gemäß Phase F und Phase c der Figur 1 das Anheben des Bolzens 2 an. Dabei wird, wie schematisch angedeutet, der Vorstrom (VS) gezündet, was zu einem Lichtbogen führt. In der Phase G ist der Hauptstrom (HS) gezündet, so daß ein kräftiger Lichtbogen entsteht mit der Folge, daß beide aneinander anzuschweißenden Teile 1 und 2 im Bereich der Lichtbogenenden anschmelzen.

Die Phase H entspricht wieder der Phase d der Figur 1, das heißt der Bolzen 2 ist nach dem Entstehen der Schmelze fest in die Schmelze des Teils 1 eingedrückt. Gemäß Phase 1 wird der Schweißkopf 6 mit der Haltevorrichtung 4 vom angeschweißten Bolzen 2 entfernt.

In Figur 3 ist schematisch die Lage des Kolbens im Zylinder, bzw. der Abgriff S am Wegmeßsystem 10 dargestellt. Außerdem zeigt dieses Diagramm auch noch den Verlauf der Stromstärke über die Zeit gesehen, wobei "VS" Vorstrom und "HS" Hauptstrom bedeuten. Man erkennt in diesem Diagramm die Zuordnung der Bewegungen zum Ein- und Ausschalten des Schweißstroms.

Es ist leicht einsehbar, daß man anstelle eines bolzenförmigen zweiten Teils 2 auch ein beliebig anders geformtes zweites Teil in der geschilderten Weise an ein erstes Teil 1 anschweißen kann. Hierbei kann die Ausführung mit der Zündspitze beispielsweise vergleichbar mit dem Anschweißen beim Buckelschweißen sein.

Aus dem Vorstehenden folgt eindeutig, daß mit Hilfe des erfindungsgemäßen Verfahrens und der zugehörigen Vorrichtung die Nachteile beim herkömmlichen Anschweißen der vorstehend beschriebenen Art vermieden werden, weil jetzt das federbelastete Eindrükken des Bolzens 2 durch den robotergeführten Schweißkopf entfällt, und die Hubhöhe unabhängig von den Bauteiltoleranzen exakt realisiert werden kann. Demgegenüber ist nämlich das federbelastete Eindrükken des Bolzens 2 von der Toleranzkette abhängig. Das Aufschlagen des Bolzens 2 mit hoher Geschwindigkeit und die Toleranzkette und die durch den Festanschlag vorgegebene ungenaue und variierende Hubhöhe gibt es beim erfindungsgemäßen Verfahren nicht mehr, weshalb exakt reproduzierbare Ergebnisse quasi ohne Ausschuß erzielbar sind.

Ein weiterer Vorteil der erfindungsgemäßen Vorrichtung und des zugehörigen Verfahrens besteht darin, daß über die Parameteranwahl der Hubhöhe in der Steuerung unterschiedlichste Hubhöhen mit ein- und demselben Schweißkopf ohne mechanischen Eingriff erzielbar sind. Andere Hubhöhen erreicht man in einfacher Weise durch Veränderung des Programms. Deshalb können mit dieser Vorrichtung unterschiedlichste Bolzen 2 mit ein- und demselben Schweißkopf geschweißt werden. All die geschilderten Vorteile erreicht man aufgrund einer Kombination von Antriebseinheit für den Bolzen 2, Wegmeßsystem 10 sowie Steuerung und Regelung für die Bewegungsparameter.

Zusammengefaßt liegende folgende Eigenschaften und Verbesserungen vor:
frei programmierbare Hubhöhe
- frei programmierbare Eintauchtiefe
- frei programmierbare Beschleunigung entsprechend den Leistungsdaten der Verstellvorrichtung 11 für Abhub und Eintauchen
- mögliches sanftes Eintauchen
- Bewegungs- und Kraftverläufe sind unabhängig von der Schweißlage, also gleich gute Ergebnisse beim Schweißen nach oben und nach unten
- Toleranzausgleich der Bauteile bzw. Werkstücke
- nutzbar für alle gängigen Bolzendurchmesser
- frei programmierbare Geschwindigkeitsverläufe während der Bewegung
- Integration aller notwendigen Bewegungen in einen Hubmechanismus bei einfachem mechanischem Aufbau und kleiner Baugröße sowie geringer Masse
- frei programmierbar: Einflußnahme auf Schweißprozeß und -qualität über die Software ohne mechanischen Umbau
- verschiedenste Bolzen (Durchmesser, Länge, Form) können mit ein- und demselben Kopf geschweißt werden
- weil ein Stützfuß bzw. Dreibein entfällt, können die Bolzen näher an Störkonturen plaziert werden.

## Patentansprüche

1. Vorrichtung zum Zusammenschweißen wenigstens zweier Teile (1, 2) für das Lichtbogenpressschweißen ohne Stützfuß
a) wobei ein erstes Teil (1) ortsfest und ein zweites, mittels einer Haltevorrichtung (4) eines Schweißkopfs (6) gehaltenes Teil (2) gegenüber dem ersten Teil mittels einer von einer Programmsteuerung (12) betätigbaren Verstellvorrichtung (11) des Schweißkopfs (6) relativ zu diesem ersten Teil (1) zu- und rückgestellt wird, und
b) wobei mittels eines Verstellantriebs (8) für den Schweißkopf (6) das zweite Teil (2) gegen das erste Teil (1) ausgerichtet und an das erste Teil (1) angepresst wird,
**dadurch gekennzeichnet**,
c) dass die Verstellvorrichtung (11) des Schweißkopfs (6) so ausgebildet ist, dass während des Anpressens des zweiten Teils (2) an das erste Teil (1) mittels eines Betätigens des Verstellantriebs (8) für den Schweißkopf (6) ein Verschieben der Haltevorrichtung gegenüber dem Schweißkopf (6) entgegen der Anpressbewegung erfolgt,
d) dass jeweils die Relativstellung der Haltevorrichtung (4) gegenüber dem Schweißkopf (6) mittels eines mit der Programmsteuerung (12) verbundenen Wegmesssystems (10) erfasst wird, und
e) dass nach dem Anpressen des zweiten Teils (2) an das erste Teil (1) die Relativbewegungen des zweiten Teils (2) gegenüber dem ersten Teil (1) mittels der Programmsteuerung (12), des Wegmesssystems (10) und der Verstellvorrichtung (11) sollwertgeregelt durchgeführt werden.

2. Vorrichtung nach Anspruch 1, **dadurch gekennzeichnet, daß** die Verstellvorrichtung (11) für die Haltevorrichtung (4) ein doppeltwirkender, insbesondere ein servopneumatischer oder servohydraulischer Arbeitszylinder ist.

3. Vorrichtung nach Anspruch 2, **dadurch gekennzeichnet, daß** die Position des Arbeitskolbens der Verstellvorrichtung (11) mittels des Wegmeßsystems (10) erfaßbar ist sowie zeit- und/oder wegabhängig regelbar ist.

4. Vorrichtung nach wenigstens einem der vorhergehenden Ansprüche, **dadurch gekennzeichnet, daß** die Programmsteuerung (12) eine Bedieneinheit zur Parametereingabe, eine Auswerteeinheit für Istwerte, eine Regelungseinheit für Sollwerte sowie Schnittstellen zum Schweißkopf (6), zur Schweißstromquelle und zum Verstellantrieb (8) aufweist.

5. Vorrichtung nach wenigstens einem der vorhergehenden Ansprüche, **dadurch gekennzeichnet, daß** der Verstellantrieb (8) durch einen Roboterarm (7) oder dergleichen gebildet ist.

6. Vorrichtung nach wenigstens einem der vorhergehenden Ansprüche, **dadurch gekennzeichnet, daß** das zweite Teil (2) ein Anschweißbolzen oder ein beliebiges Anschweißteil und die Haltevorrichtung (4) eine Spannzange, Spannhülse oder dergleichen Spannvorrichtung ist.

7. Verwendung der Vorrichtung gemäß wenigstens einem der vorhergehenden Ansprüche, **gekennzeichnet durch** folgende Verfahrensschritte:
a) Positionieren des in einer Haltevorrichtung (4) befindlichen zweiten Teils (2) im Höhenabstand vom ersten Teil (1) mittels eines Verstellantriebs (8);
b) Zustellen eines Schweißkopfes (6) mit der daran in Zustellrichtung (14) verschiebbaren Haltevorrichtung (4) mittels des Verstellantriebs (8) bis zum Auftreffen des zweiten Teils (2) auf dem ersten Teil (1);
c) Weiteres Zustellen des Schweißkopfes (6) mittels des Verstellantriebs (8) bei Relatiwerstellung der Haltevorrichtung (4) gegenüber dem Schweißkopf (6) bis zum Erreichen eines eingestellten Verstellwegs des Verstellantriebs (8);
d) Ermittlung der Relativlage der Haltevorrichtung (4) gegenüber dem Schweißkopf (6) bei Erreichen des Verstellwegs mittels eines Wegmeßsystems (10) (Nullpunktfestlegung);
e) Zündung des Vorstroms;
f) Abschmelzen einer Zündspitze des zweiten Teils (2) und/oder geregeltes Anheben der Haltevorrichtung (4) mit dem zweiten Teil (2) gegenüber dem Schweißkopf (6) um einen vorgegebenen Betrag mittels der Verstellvorrichtung (11);
g) Zündung des Hauptstroms;
h) Zustellung des zweiten Teils (2) in Richtung auf das erste Teil (1) mittels der Verstellvorrichtung (11) und Eintauchen in das Schmelzbad des ersten Teils (1) um die vorgegebenen Eintauchtiefe;
i) Abschalten des Schweißstroms;
k) Erstarren der Schmelze;
l) Freigabe des zweiten Teils (2) und Entfernen des Schweißkopfs (6), insbesondere mittels des Verstellantriebs (8) vom ersten Teil (1) um einen vorgebenen Betrag.

8. Verwendung der Vorrichtung nach Anspruch 7, **dadurch gekennzeichnet, daß** vor dem weiteren Zustellen des zweiten Teils (2) gemäß Verfahrensschritt c) der Druck im Arbeitszylinder abgesenkt wird.

9. Verwendung der Vorrichtung nach Anspruch 7 oder 8, **dadurch gekennzeichnet, daß** nach Erreichen der Schweißposition für das zweite Teil die Lage der Haltevorrichtung (4) als Sollwert gesetzt wird.

10. Verwendung der Vorrichtung nach einem der Ansprüche 7 bis 9, **dadurch gekennzeichnet, daß** nach dem Erreichen des eingestellten Verstellweges des Verstellantriebs (8) der Druck im Arbeitszylinder angehoben wird.

11. Verwendung der Vorrichtung nach einem der Ansprüche 7 oder 10, **dadurch gekennzeichnet, daß** die Anpreßkraft für das zweite Teil (2) am ersten Teil (1) und die Hubhöhe der Haltevorrichtung (4) für das weitere Anheben der Haltevorrichtung (4) frei programmierbar sind.

12. Verwendung der Vorrichtung nach wenigstens einem der Ansprüche 7 bis 11, **dadurch gekennzeichnet, daß** der Ein- und Ausschalt-Zeitpunkt und die Stärke des Vor- und/oder des Hauptstroms frei programmierbar sind.

13. Verwendung der Vorrichtung nach wenigstens einem der Ansprüche 7 bis 12, **dadurch gekennzeichnet, daß** zumindest die Beschleunigung, Zustellgeschwindigkeit und Verzögerung des zweiten Teils im Verfahrensschritt h) frei programmierbar ist.

14. Verwendung der Vorrichtung nach Anspruch 13, **dadurch gekennzeichnet, daß** die Zustellbewegung des Verfahrensschrittes h) in Teilbewegungen unterschiedlicher Zustellgeschwindigkeit unterteilbar und frei programmierbar ist, wobei insbesondere zunächst stark beschleunigt und der Bolzen (2) mit hoher Geschwindigkeit an das erste Teil (1) angenähert wird, während nach einer starken Verzögerung der Bolzen (2) mit geringer Geschwindigkeit in die Schmelze des ersten Teils (1) eingetaucht wird.

15. Verwendung der Vorrichtung nach wenigstens einem der Ansprüche 7 bis 14, **dadurch gekennzeichnet, daß** die Zustell-Endposition des zweiten Teils (2) in der Schmelze des ersten Teils (1) frei programmierbar ist.

16. Verwendung der Vorrichtung nach wenigstens einem der Ansprüche 7 bis 15, **dadurch gekennzeichnet, daß** die Bolzen (2) automatisch und programmgesteuert in die Haltevorrichtung (4) übergebbar sind.

## Claims

1. A device for welding together at least two parts (1, 2) using the arc welding process without a supporting foot,
a) wherein a first part (1) is held stationary and a second part (2), held in a holding device (4) of the welding head (6), is moved back and forth relative to the first part by means of an actuating device (11) in the welding head (6) to be actuated by a program control unit (12), and
b) wherein by means of a manipulator (8) for the welding head (6) the second part (2) is aligned relative to the first part (1) and is pressed against the first part (1) by means of a manipulator (8) for the welding head (6),
**characterized in**
c) that the actuating device (11) of the welding head (6) is configured such that, while the second part (2) is pressed to the first part (1) by actuating the manipulator (8) for the welding head (6), the holding device is displaced relative to the welding head (6) opposite to the pressing movement,
d) that in each case the position of the holding device (4) relative to the welding head (6) is recorded by means of a path-measuring system (10) connected with the program control unit (12), and
e) that once the second part (2) has been pressed against the first part (1), the movements of the second part (2) relative to the fist part (1) are executed by means of the program control unit (12), the path-measuring system (10) and the actuating device (11), according to a series of set-point control commands.

2. A device according to claim 1, **characterized in that** the actuator (11) for the holding device (4) is a double-acting, in particular a servo-pneumatic or a servo-hydraulic working cylinder.

3. A device according to claim 2, **characterized in that** the position of the working piston of the actuator (11) is recorded by the path-measuring system (10) and can also be regulated as a function of time and/or distance travelled.

4. A device according to at least one of the preceding claims, **characterized in that** the program controller (12) possesses a control unit for inputting parameters, a unit for evaluating actual values, a unit for regulating set-points, as well as interfaces for the welding head (6), the welding current source and the manipulator (8).

5. A device according to at least one of the preceding claims, **characterized in that** the manipulator (8) has the form of a robot arm (7) or similar.

6. A device according to at least one of the preceding claims, **characterized in that** the second part (2) is a weld-on bolt or any desired weld-on part, and the holding device (4) is a collet chuck, clamping sleeve or a similar clamping device.

7. Use of the device according to at least one of the preceding claims, **characterized by** the following procedural steps:
a) the second part (2), held in the holding device (4), is positioned at a certain height above the first part (1) by means of a manipulator (8);
b) a welding head (6), with the holding device (4), which can be displaced in the feed direction (14), is advanced by means of the manipulator (8) until the second part (2) comes into contact with the first part (1);
c) the welding head (6) is further advanced by means of the manipulator (8), while the holding device (4) is displaced relative to the welding head (6) until the manipulator (8) has travelled a pre-set distance;
d) the position of the holding device (4) relative to the welding head (5) is determined by means of a path-measuring system (10) once the pre-set travel distance has been covered (zero-point determination);
e) the preliminary welding current is triggered;
f) the arc-initia ion tip of the second part (2) is melted away and/or the holding device (4) with the second part (2) is raised in a controlled manner by a predetermined amount relative to the welding head (6) by means of the actuator (11);
g) the main welding current is triggered;
h) the second part (2) is fed towards the first part (1) by means of the actuator (11) and plunged into the weld puddle of the first part (1) to the pre-set plunge depth;
i) the welding current is switched off;
k) the weld puddle solidifies;
l) the second part (2) is released and the welding head (6) is moved away by a predetermined amount from the first part (1), in particular by using the manipulator (8).

8. Use of the device according to claim 7, **characterized in that** prior to feeding the second part (2) according to procedural step c) the pressure of the working cylinder is reduced.

9. Use of the device according to claim 7 or 8, **characterized in that** once the welding position for the second part has been reached, the position of the holding device (4) is entered as a set-point.

10. Use of the device according to one of the claims 7 or 9, **characterized in that** once the manipulator (8) has travelled the pre-set distance, the pressure in the working cylinder is increased.

11. Use of the device according to one of the claims 7 to 10, **characterized in that** the force with which the second part (2) is pressed against the first part (1), and the stroke length of the holding device (4) for the further lifting of the holding device (4) are freely programmable.

12. Use of the device according to at least one of the claims 7 to 11, **characterized in that** the on/off switching points and the strength of the preliminary welding current and/or the main welding current are freely programmable.

13. Use of the device according to at least one of the claims 7 to 12, **characterized in that** at least the acceleration, feed travel speed and deceleration of the second part in procedural step h) are freely programmable.

14. Use of the device according to claim 13, **characterized in that** the feed movement in procedural step h) is freely programmable and can be subdivided into partial movements executed at different speeds, so that, in particular after an initial burst or rapid acceleration, the bolt (2) is moved at high speeds towards the first part (1), and then after rapid deceleration the bolt (2) is plunged at low speed into the weld pool of the first part (1).

15. Use of the device according to at least one of the claims 7 to 14, **characterized in that** the feed end position of the second part (2) in the weld puddle of the first part (1) is freely programmable.

16. Use of the device according to at least one of the claims 7 to 15, **characterized in that** the bolts (2) are transferred automatically and under program control to the holding device (4).

## Revendications

1. Dispositif pour assembler par soudage au moins deux pièces (1, 2) par soudage par pression, sans pied de soutien.
a) Où une première pièce (1) est fixe et une deuxième pièce (2), maintenue par un dispositif de tenue (4) d'une tête de soudage (6) par rapport à cette première pièce, peut être placée par rapport à cette première pièce (1) au moyen d'un dispositif de réglage (11) actionnable par une commande programmée (12) de la tête de soudage (6).
b) Où la deuxième pièce (2) est alignée par rapport à la première pièce (1) et pressée contre la première pièce (1) au moyen d'une commande de réglage (8) de la tête de soudage (6) **caractérisé en ce que**,
c) Le dispositif de réglage de la tête de soudage (6) est réalisé de sorte que pendant l'application de la deuxième partie (2) contre la première partie (1) au moyen de l'actionnement de la commande de réglage (8) de la tête de soudage (6), un déplacement du dispositif de tenue (4) par rapport à la tête de soudage (6) se produit à l'encontre du mouvement d'application,
d) Chaque fois la position du dispositif de tenue (4) par rapport à la tête de soudage (6) est enregistrée au moyen d'un système de mesure de déplacement (10) relié à la commande programmée (12),
e) Après l'application de la deuxième pièce (2) sur la première pièce (1), les mouvements relatifs de la deuxième pièce (2) par rapport à la première pièce (1) sont effectués au moyen de la commande programmée (12), du système de mesure de déplacement (10) et du dispositif de réglage (11).

2. Dispositif selon la revendication 1 , **caractérisé en ce que** le dispositif de réglage (11) du dispositif de tenue (4) est un cylindre de travail, en particulier servo-pneumatique ou servo-hydraulique, à action double.

3. Dispositif selon la revendication (2), **caractérisé en ce que** la position du piston de travail du dispositif de réglage (11) est détectable au moyen du système de mesure de déplacement (10) et qu'elle est réglable en fonction du temps et /ou en fonction du déplacement.

4. Dispositif selon l'une au moins des revendications précédentes, **caractérisé en ce que** la commande programmée (12) possède une unité de commande pour l'entrée des paramètres, une unité d'exploitation des valeurs instantanées, une unité de réglage des valeurs de consigne ainsi que des interfaces vers la tête de soudage (6), la source de courant de soudage et vers la commande de réglage (8).

5. Dispositif selon l'une au moins des revendications précédentes, **caractérisée en ce que** la commande de réglage (8) est constituée d'un bras de robot (7) ou similaire.

6. Dispositif selon l'une au moins des revendications précédentes, **caractérisé en ce que** la deuxième pièce (2) est un boulon à souder ou une pièce quelconque à rapporter par soudage, et **en ce que** le dispositif de tenue (4) est une pince de serrage, un manchon de serrage ou similaire.

7. Utilisation du dispositif selon l'une au moins des revendications précédentes, **caractérisée par** les étapes suivantes :
a) La deuxième pièce (2), maintenue dans le dispositif de tenue (4), est positionnée à une certaine hauteur au-dessus de la première pièce (1) au moyen d'une commande de réglage (8) ;
b) Une tête de soudage (6), avec le dispositif de tenue (4), qui peut être déplacé dans la direction d'amenée (14), est amenée au moyen de la commande de réglage (8) jusqu'à ce que la deuxième pièce (2) est en contact avec la première pièce (1) ;
c) La tête de soudage (6) continue d'avancer au moyen de la commande de réglage (8) pendant que le dispositif de tenue (4) effectue un déplacement relatif par rapport à la tête de soudage (6), jusqu'à ce que la commande de réglage (8) a atteint une distance préréglée ;
d) La position relative au dispositif de tenue (4) par rapport à la tête de soudage (6) est déterminée au moyen d'un système de mesure de déplacement (10) lorsque la distance préréglée est atteinte (détermination d'un point zéro) ;
e) Le courant préliminaire est allumé ;
f) Une pointe d'allumage de la deuxième pièce (2) fond et/ou le dispositif de tenue (4) avec la deuxième pièce (2) subit un relèvement contrôlé par rapport à la tête de soudage (6), au moyen du dispositif de réglage (11) ;
g) Allumage du courant principal ;
h) La deuxième pièce (2) est amenée en direction de la première pièce (1) au moyen du dispositif de réglage (11) et elle pénètre dans le bain de soudage de la première pièce (1) à une profondeur de pénétration préréglée ;
i) Extinction du courant de soudage ;
k) Solidification de la soudure ;
l) la deuxième pièce (2) est libérée et la tête de soudage (6) s'écarte dans une mesure prédéterminée de la première pièce (1), en particulier au moyen de la commande de réglage (8).

8. Utilisation du dispositif selon la revendication 7, **caractérisée en ce que** avant le rapprochement de la deuxième pièce (2) selon l'étape de procédé (c), la pression dans le cylindre de travail est abaissée.

9. Utilisation du dispositif selon la revendication 7 ou 8, **caractérisée en ce que** lorsque la position de soudage pour la deuxième pièce est atteint, la position du dispositif de tenue (4) devient valeur de consigne.

10. Utilisation du dispositif selon l'une des revendications 7 à 9 **caractérisée en ce que** lorsque la commande de réglage (8) a atteint la distance de déplacement préréglée, la pression dans le cylindre de travail est augmentée.

11. Utilisation du dispositif selon l'une des revendications 7 ou 10, **caractérisée en ce que** la force de pression de la deuxième pièce (2) sur la première pièce (1) et la hauteur d'élévation du dispositif de tenue (4) pour le relevage du dispositif de tenue (4) sont librement programmables.

12. Utilisation du dispositif selon au moins l'une des revendications 6 à 11, **caractérisée en ce que** le moment d'allumage et d'extinction ainsi que les intensités du courant préliminaire et/ou du courant principal sont librement programmables.

13. Utilisation du dispositif selon au moins l'une des revendications 7 à 12, **caractérisée en ce que** au moins l'accélération, la vitesse d'amenée et la décélération de la deuxième pièce, dans l'étape de procédé h), sont librement programmables.

14. Utilisation du dispositif selon la revendication 13, **caractérisée en ce que** le mouvement d'amenée dans l'étape de procédé h) est librement programmable et peut être subdivisé en mouvements partiels ayant des vitesses d'amenées différentes, en particulier **en ce que** le boulon (2) peut d'abord être fortement accéléré et amené à grande vitesse vers la première pièce (1), tandis qu'après une forte décélération, le boulon (2) est trempé à faible vitesse dans la soudure de la première pièce (1).

15. Utilisation du dispositif selon au moins l'une des revendications 7 à 14, **caractérisée en ce que** la position finale d'amenée de la deuxième pièce (2) dans la soudure de la première pièce (1) est librement programmable.

16. Utilisation du dispositif selon au moins l'une des revendications 7 à 15, **caractérisée en ce que** les boulons (2) sont transférables automatiquement et sous contrôle d'un programme dans le dispositif de tenue (4).
